# DEMANDE DE BREVET EUROPEEN

(11) **EP 3 062 396 A1**
(43) Date de publication de la demande: **31.08.2016**
(21) Numéro de dépôt: 16156787.0
(22) Date de dépôt: 22.02.2016
(51) Int. Cl.: H01R 4/06, H01R 43/20, B60N 3/14, H01R 13/20, H01R 13/652, H01R 103/00

(54) **PRISE DE COURANT POUR HABITACLE DE VÉHICULE**

(30) Priorité: 26.02.2015 FR 1551658
(71) Demandeur: VALEO VISION, 93012 Bobigny Cedex (FR)
(72) Inventeur: DEMAZEAU, Jean-Yves, 81200 AUSSILLON (FR); DESCAZEAUX, Benoît, 81100 CASTRES (FR); BERNABLE, Matthieu, 81100 CASTRES (FR); FOURNIER, Sylvain, 12580 VILLECOMTAL (FR)

(57) **Abrégé**

Prise de courant (10, 110, 210) pour un habitacle de véhicule, comprenant un corps de prise (2) et au moins un élément de connexion électrique (5, 6, 7) fixé au corps de prise (2) par clinchage.

## Description

L'invention concerne les prises de courant pour habitacle de véhicule.

Ces prises, dites « 12 Volt », bien qu'elles acceptent aussi les tensions de 24V, permettent de brancher des appareils électriques tels que des GPS, des chauffe-biberons, des convertisseurs ou des chargeurs électriques...

On connaît à cet effet un produit de la demanderesse. Cette prise, située au niveau ou en dessous du tableau de bord du véhicule, comprend quatre composants : un capot, un corps de prise comprenant une languette de connexion dite « négative », un anneau avec un corps de connexion intégré et une languette de connexion électrique dite « positive ». En ouvrant le capot, un utilisateur peut y brancher l'un de ses appareils électriques.

L'inconvénient de ce produit est qu'il n'est compatible qu'avec les véhicules fabriqués par un nombre limité de constructeurs automobiles. Ainsi, le corps de prise du produit est conçu pour accueillir uniquement la languette de connexion électrique négative adéquate.

Parallèlement, le produit destiné à un autre constructeur automobile comprend neuf éléments, dont les éléments similaires à ceux de la première prise présentent des dimensions différentes. Le produit est adapté aux dimensions du tableau de bord, à l'agencement de son intérieur, ainsi qu'au design du constructeur. Le nombre de neuf pièces est relativement élevé, ce qui engendre des coûts notamment pour la fabrication de toutes ces pièces et la gestion de leurs stocks. De même, le corps de prise pour les véhicules de ce constructeur est conçu pour accueillir uniquement la languette de connexion électrique négative prévue pour ces véhicules. Le même inconvénient vaut pour d'autres constructeurs pour lesquels la demanderesse fournit des prises de courant pour habitacle de véhicule.

La même situation peut se présenter pour d'autres fournisseurs de prises pour véhicule qui doivent donc produire pour les différents constructeurs plusieurs produits différents, bien que les éléments de ces produits soient similaires.

Un but de l'invention est de proposer un produit adaptable à plusieurs types de constructeurs.

On prévoit à cet effet un ensemble pour la réalisation d'une prise de courant pour un habitacle de véhicule, l'ensemble comprenant :
- un corps de prise ; et
- au moins un élément de connexion électrique fixé au corps de prise par clinchage.

Ainsi, le corps de prise est compatible avec plusieurs éléments de connexion électriques différents, par exemple des languettes de connexion dites négatives, et on n'est plus obligé de concevoir un corps de prise pour chaque type de prise différent correspondant à différents constructeurs automobiles. Cet agencement autorise aussi comme on le verra de fabriquer la prise avec un nombre relativement réduit de pièces, par exemple cinq.

D'autre part, la fixation de l'élément de connexion électrique fixé au corps de prise par clinchage évite l'ajout de matière lors de la fixation et permet d'assurer une meilleure conductivité électrique entre ces deux pièces.

En outre l'invention possède les caractéristiques suivantes, considérées isolément ou en combinaison :
- la fixation entre le corps de prise et l'élément de connexion électrique est agencée pour permettre un contact électrique entre le corps de prise et l'élément de connexion,
- le corps de prise comprend une ouverture débouchant sur un réceptacle destiné à recevoir un connecteur pour l'alimentation électrique d'un appareil électrique,
- le corps de prise comprend au moins un fond plan opposé à l'ouverture du réceptacle,
- le fond plan du corps de prise comprend au moins un orifice débouchant principal,
- l'orifice débouchant principal est situé au centre du fond plan du corps de prise,
- l'orifice débouchant principal présente un pourtour comprenant au moins un arc de cercle,
- le ou chaque élément de connexion électrique comprend un support plan, et une languette en saillie du support,
- le support plan est fixé au fond plan du corps de prise par clinchage,
- le support plan borde au moins en partie l'orifice débouchant principal,
- la prise de courant comprend un socle fixé dans une position prédéterminée au corps,
- le socle est une bague,
- le socle présente un relief s'étendant en saillie d'un fond du socle pour former une butée dans la prise lors de la réception d'un connecteur,
- l'élément de connexion électrique étant un premier élément de connexion électrique, la prise de courant comprend en outre au moins un deuxième élément de connexion électrique,
- chaque deuxième élément présente un orifice sensiblement hexagonal de connexion électrique,
- le premier élément est fixé au corps par clinchage au niveau d'au moins un point de fixation,
- le premier élément est fixé au corps par deux points de fixation obtenu par clinchage,
- chaque point de fixation est de forme circulaire, conique, rectangulaire, polygonal, ou de forme hybride obtenue à partir des formes précédentes,
- chaque point de fixation est de forme circulaire,
- chaque point de fixation est un point de fixation double,
- la prise de courant comprend au moins un capot de fermeture d'un logement de la prise,
- le corps de prise et chaque élément de connexion électrique sont formés d'au moins un matériau électriquement conducteur,
- le corps de prise le au moins un matériau électriquement conducteur comprend de l'aluminium et/ou du cuivre.

L'invention a aussi pour objet un procédé de fabrication d'une prise de courant pour habitacle de véhicule comprenant un corps de prise et un élément de connexion électrique, l'élément de connexion électrique étant fixé au corps de prise selon les étapes suivantes :
- mettre en contact l'élément de connexion électrique et le corps de prise,
- fixer l'élément de connexion électrique au corps de prise par clinchage.

De plus l'invention possède les caractéristiques suivantes, considérées isolément ou en combinaison :
- le premier élément est fixé au corps par au moins un point de fixation obtenu par clinchage,
- le point de fixation obtenu par clinchage est un point double. Avantageusement, cette caractéristique permet d'éviter la rotation de l'élément de connexion électrique,
- le premier élément est fixé au corps par au moins deux points de fixation obtenus en même temps par clinchage. Avantageusement, cette caractéristique permet d'éviter la rotation de l'élément de connexion électrique,
- l'étape de fixation de l'élément de connexion électrique au corps de prise est réalisée sans ajout de matière,
- l'élément de connexion électrique est embouti dans le corps de prise,
- l'emboutissage de l'élément de connexion électrique dans le corps de prise crée au moins un premier renfoncement dans l'élément de connexion et un deuxième renfoncement dans le corps de prise de sorte à ce qu'une partie d'une paroi extérieure du premier renfoncement vienne en saillie dans une paroi intérieure du deuxième renfoncement,
- le corps de prise est embouti dans l'élément de connexion électrique,
- le procédé de fabrication comprend une étape d'insertion du corps de prise dans un socle,
- le procédé de fabrication comprend comprenant une étape de fixation d'un capot sur le socle.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 illustre une vue en perspective éclatée d'une prise de courant obtenue avec un ensemble selon un mode de réalisation de l'invention ;
- la figure 2 est une vue en perspective du corps et d'un premier élément de connexion électrique de la prise de la figure 1;
- la figure 3 illustre les deux composants de la figure 2 fixés l'un à l'autre ;
- les figures 4 et 5 illustrent le corps de prise de la figure 2 respectivement en vues de côté et de dessus ;
- les figures 6, 7 et 8 illustrent des vues en perspective respectivement de trois premiers éléments de connexion électrique de l'ensemble selon ce mode de réalisation de l'invention ;
- les figures 9 à 14 sont des vues de différents éléments de la prise de la figure 1 ;
- les figures 15 à 20 et 21 à 26 sont des vues analogues montrant deux autres prises réalisées à partir de cet ensemble ;
- la figure 27 est une vue en section illustrant l'agencement d'un deuxième élément de connexion (languette positive) dans l'une des prises;
- les figures 28 et 29 sont des vues de dessus de deux capots des prises précitées ; et
- Les figures 30 à 33 illustrent des procédés de clinchage.

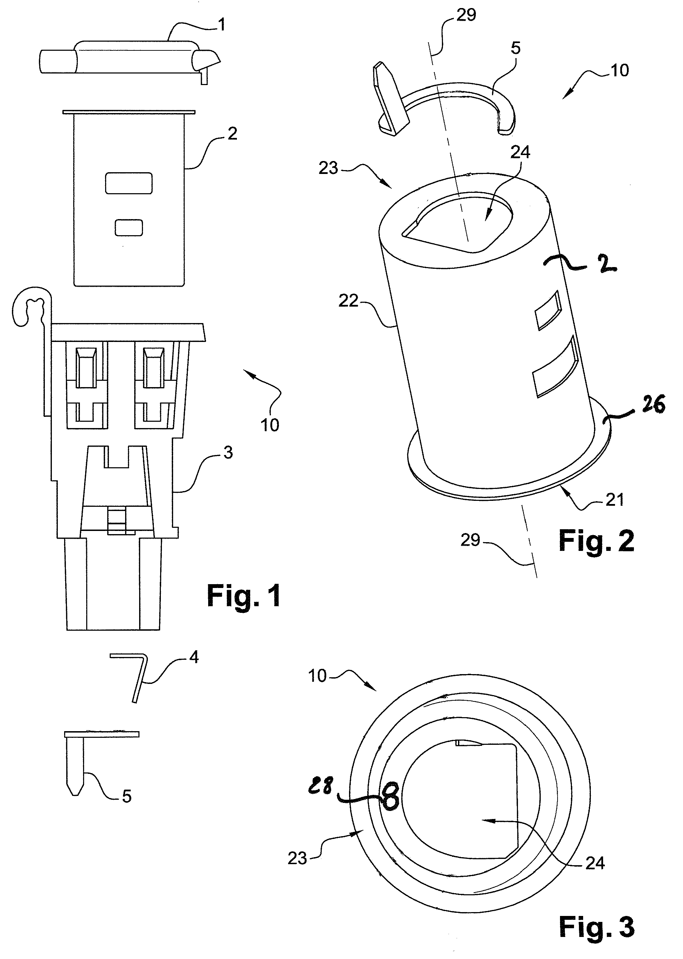

La figure 1 montre une prise de courant 10 ou prise de puissance de type 12 V pour un habitable de véhicule réalisée au moyen d'un ensemble selon un mode de réalisation de l'invention.

On distingue un capot d'ouverture 1, un corps de prise 2, qui est le seul composant de cet ensemble à être identique dans toutes les prises que nous décrirons. Sont illustrés également un socle ou bague 3 apte à recevoir le corps 2, un premier élément de connexion électrique 5 que nous appellerons dans la suite languette négative, et un deuxième élément de connexion électrique 4 que nous appellerons dans la suite languette positive.

La figure 2 permet de mieux visualiser le corps 2 et la languette négative 5. Le corps présente une forme générale tubulaire au niveau de sa partie principale 22, en l'espèce cylindrique de révolution autour d'un axe 29. L'une de ses extrémités 21 présente un rebord circulaire ou collerette 26. Ce rebord circulaire 26 entoure au moins partiellement une ouverture 27 du corps de prise 2. Cette ouverture 27 débouche sur un réceptacle destiné à recevoir un connecteur pour l'alimentation électrique d'un appareil électrique. L'extrémité opposée 23 peut présenter au centre un orifice principal 24 débouchant formé d'un demi-cercle contigu à un rectangle. En variante, l'extrémité opposée 23 peut être pleine.

Au niveau des parois de la partie principale 22, le corps présente deux orifices rectangulaires circonférentiels, alignés verticalement, avec l'un légèrement plus long que l'autre.

Le corps de prise 2 est ainsi compatible avec plusieurs languettes négatives, mais ne peut en recevoir qu'une à la fois.

La figure 3 permet justement de visualiser, en vue de dessous, l'accrochage par un point double 28 obtenu par clinchage, de la languette négative 5 dans l'extrémité 23 du corps. Dans cette configuration le point double 28 est obtenu par emboutissage du corps de prise dans la languette négative.

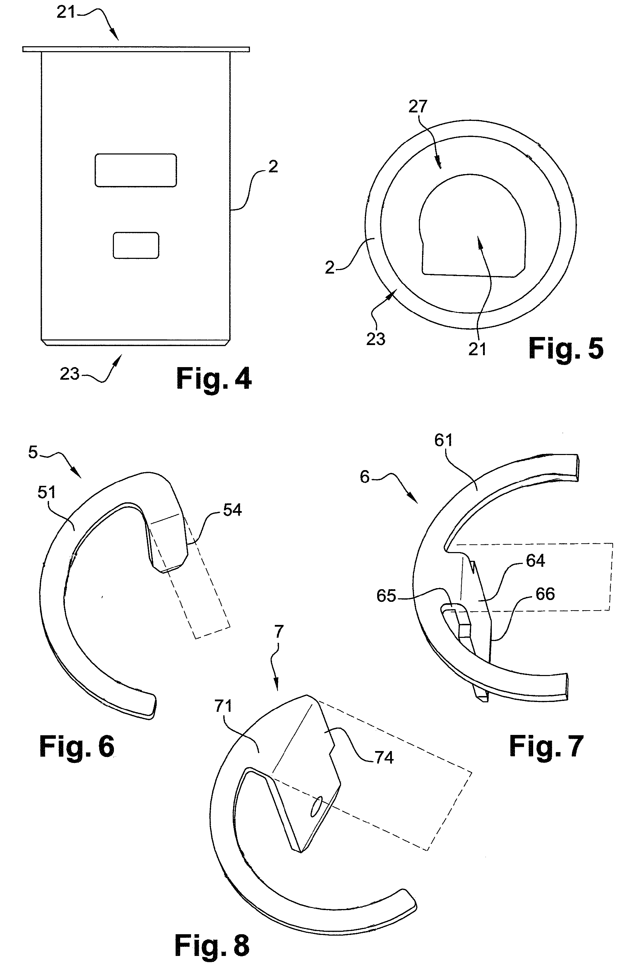

En référence à la figure 6, la languette négative 5 comprend un support plan 51 qui présente sensiblement une forme de demi-cercle, et une partie plane 54 en saillie, qui forme la languette de connexion proprement dite. La languette 54 est orientée perpendiculairement au support 51. La languette 54 est située dans le prolongement du demi-cercle formé par le support 51. Concernant la fabrication de ce premier élément de connexion, il est fabriqué à plat. Les pointillés illustrent d'ailleurs la position de la languette 54 lorsque l'élément est plat. Cet élément de connexion est issu du découpage d'une tôle plate, la languette proprement dite 54 est pliée de façon à être orientée perpendiculairement au support 51.

Les éléments de connexion négatifs des figures 7 et 8 comportent les mêmes éléments, mais présentent des dimensions et/ou des positions différentes.

Ainsi, dans la languette négative 6 illustrée à la figure 7, la languette 64 se trouve sur le centre du support en demi-cercle 61. De plus, la languette 64 présente une base 65 rétrécie par rapport à une partie principale 66 plus large que la languette 54 de l'élément de connexion 5.

Sur la figure 8, la languette proprement dite 74 est situé au même endroit que celle de l'élément 5, c'est-à-dire dans le prolongement du support en demi-cercle 71. La languette proprement dite, c'est-à-dire la partie plane 74, présente des dimensions plus importantes, en longueur comme en largeur, que les languettes 54 et 64 des deux premiers éléments de connexion décrits précédemment.

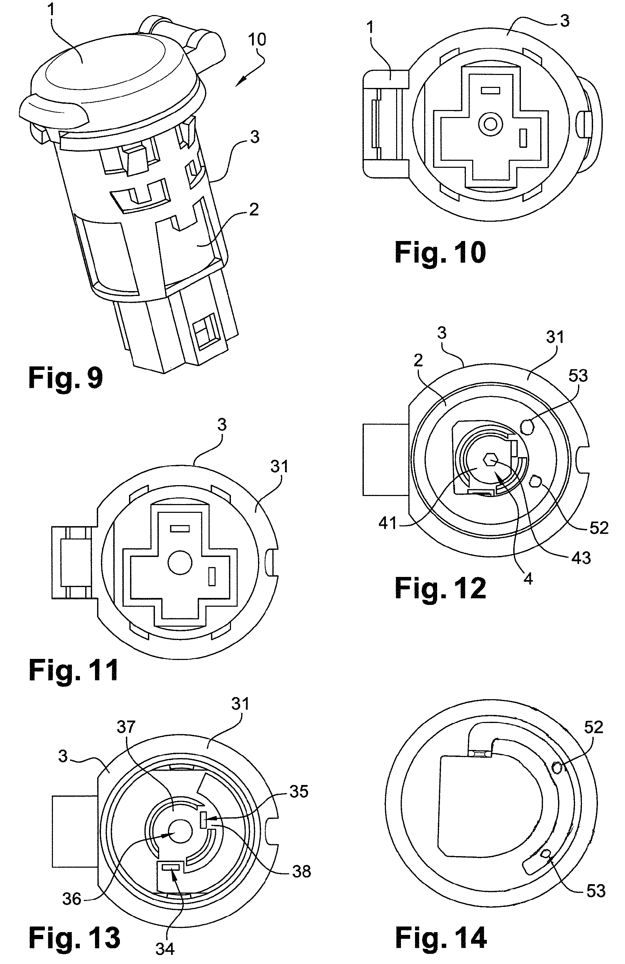

La figure 9 illustre une prise de courant réalisée avec les éléments de la figure 1.

On distingue le capot 1 qui permet d'ouvrir la prise 10 pour y brancher un connecteur, et le corps de prise 2 qui est reçu et maintenu dans le socle 3. Ce dernier comprend une partie circulaire 31, référencée notamment à la figure 11, qui est identique pour les trois socles des prises ici décrites, bien que ces socles soient différents de façon à s'adapter aux trois languettes négatives et aux trois languettes positives correspondantes.

La figure 12 illustre une vue de l'assemblage permettant de distinguer le corps 2 retenu dans le socle 3, les points de fixation par clinchage 52 et 53 de l'élément négatif 5 dans le corps 2, et au milieu du socle 3, un deuxième élément de connexion électrique 4 ayant une languette positive. Le corps de prise 2 et le socle 3 prennent en sandwich entre leurs fonds l'élément négatif 5. Dans cette configuration les points de fixation par clinchage 52 et 53 sont obtenus par emboutissage du support 51 de la languette négative 5 dans le fond plan 23 du corps de prise 2.

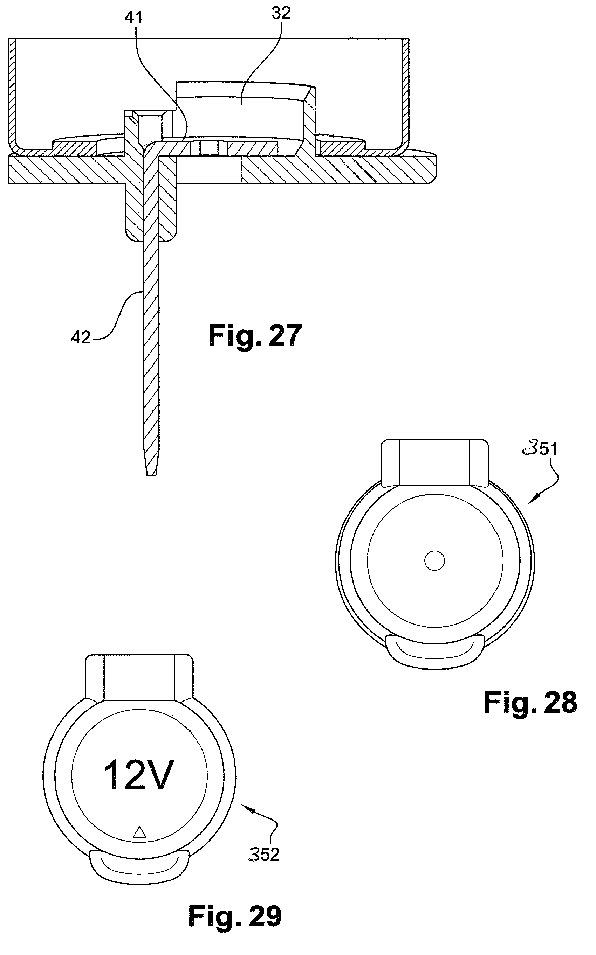

L'agencement du deuxième élément de connexion électrique 4 avec la languette positive est aussi visible à la figure 27. Il présente une partie plane 41 ainsi que la languette proprement dite 42, qui s'étend en direction perpendiculaire par rapport à la partie plane 41. La languette positive présente en son centre un orifice 43 de forme hexagonale, référencé à la figure 12.

De plus, le socle 3, interposé entre le corps 2 et l'élément positif 4, isole électriquement cet élément par rapport au corps.

Un relief 32 du fond du socle, visible à la figure 27, s'étend en saillie du fond du corps à travers son orifice et fait office de butée lors du branchement d'un connecteur à cette prise 10. Ce relief circulaire 32 entoure la languette positive 41.

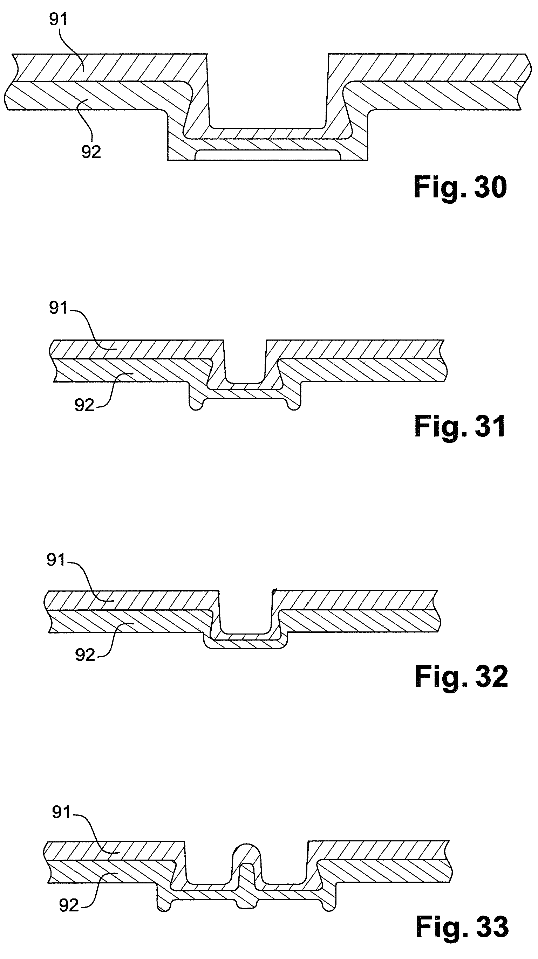

Comme indiqué précédemment, l'une des particularités de cette prise est que la languette négative 5 est fixée au corps de prise par deux points de fixation 52 et 53 obtenus par clinchage. Cette fixation se fait par emboutissage des deux pièces entre un poinçon, guidé par une presse, et une matrice. Le poinçon peut emboutir le corps 2 dans l'élément électrique 3 ou l'élément électrique 3 dans le corps 2. Le retrait du poinçon laisse une cavité au niveau du point de fixation. Il en résulte que les pièces subissent une déformation plastique à froid formant un point de connexion de sorte que la languette négative ne peut être retirée du corps sans abîmer le corps ou la languette. Ce type de fixation correspond à du clinchage. En l'espèce, le type de clinchage utilisé est du «TOX-micropoint ». En effet, ce procédé est adapté à la miniaturisation des pièces car il permet l'assemblage de la languette négative et du corps à partir de 0.1 mm d'épaisseur. Un procédé de clinchage de type « TOX-micropoint » est illustré à la figure 30. Une languette négative 91 est enfoncée dans un corps de prise 92. Cela est représenté schématiquement à la figure 31. Il est aussi possible d'emboutir le corps de prise 92 dans la languette négative 91. D'autres types de clinchages sont utilisés, tels que le « RivetClinch TOX », représenté schématiquement à la figure 32. Dans le cas du « RivetCLINCH TOX », les tenues de point sont comparables à celles d'un rivet autopoinçonneur, mais pour un coût moins élevé. Un autre type de clinchage est le « TOX-TWINpoint » ou point de fixation double, représenté à la figure 33. Le point double empêche la rotation du point et les tenues sont supérieures d'environ deux fois à celles d'un procédé monopoint. Tous ces types de clinchage offrent en outre une excellente conductivité électrique et sont effectués sans ajout de matière.

La figure 13 est une vue d'extrémité similaire à celle de la figure 12, mais sans le corps ni les languettes positives et négatives. Ainsi, un emplacement central 37 est destinée à recevoir le support plan 41 de la languette positive 4, tandis que les contours 38 du socle sont agencés pour maintenir en position fixe le corps de prise 2. Le socle comporte également deux ouvertures rectangulaires 34 et 35 ainsi qu'un orifice central 36. Ces ouvertures 34 et 35 permettent le passage de la languette de l'élément de connexion électrique.

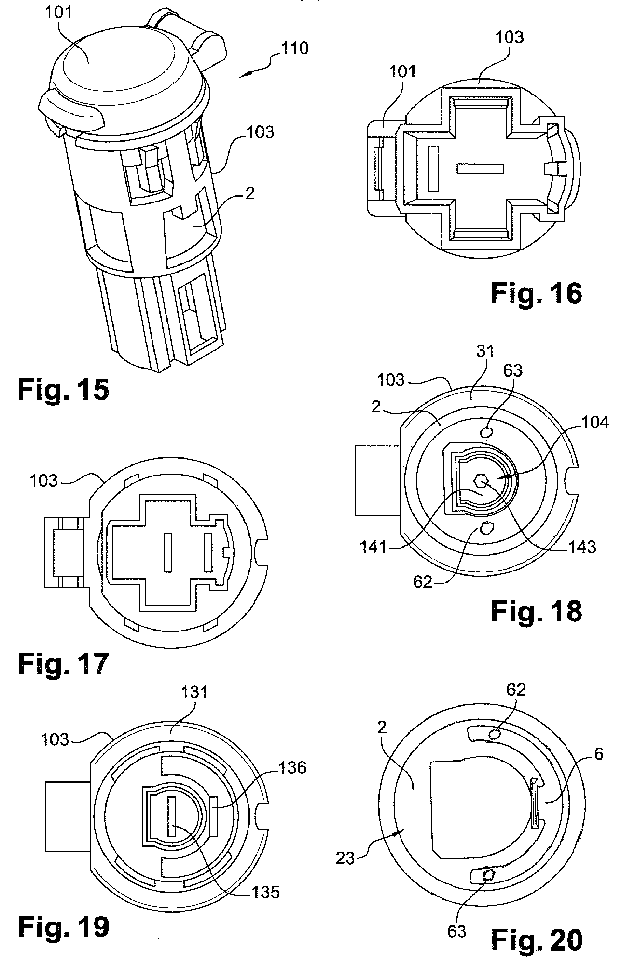

Les figures 15 à 20 montrent une deuxième prise de courant, dans lequel le corps de prise 2 est identique à celui du premier mode de réalisation. De même, le socle 103 comprend une partie 31 identique à celui du premier mode.

La principale particularité de cette prise est que c'est la languette négative 6 qui est fixée au corps de prise, au lieu de la languette négative 5. Comme l'illustre la figure 20, les points de fixation 62 et 63 de la languette négative 6 sont positionnés de part et d'autre de la languette négative et aux extrémités du support plan 61 de la languette négative 6, le support plan 61 ayant une forme semi-circulaire. Dans cette configuration les points de fixation par clinchage 62 et 63 sont obtenus par emboutissage du support 61 de la languette négative 6 dans le fond plan 23 du corps de prise 2.

La figure 18 illustre une vue de dessus de l'assemblage de cette deuxième prise, à nouveau sans capot, qui comprend une languette positive 104 différente de la languette 4 par la forme de son support 141, et on observe les points de fixation 62 et 63 de la languette négative 6 fixés au corps 2.

Les figures 16, 17 et 19 illustrent des vues de socle 103, qui diffère du socle 3 précédent. Notamment, il n'y a pas d'orifice central rond. Le socle 103 comporte en revanche deux ouvertures rectangulaires 135 et 136 visibles à la figure 19, qui sont cette fois parallèles entre elles.

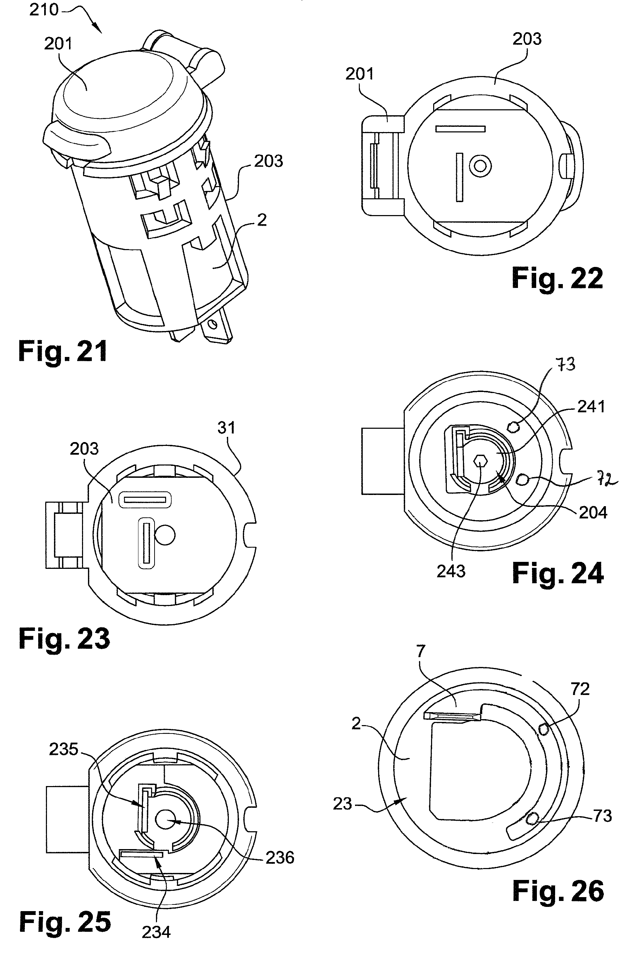

La figure 21 illustre une troisième prise. Le corps de prise 2 est encore identique, et cette prise a comme particularité principale de comporter la languette négative 7, qui est fixée au corps par les points de fixation 72 et 73, comme cela est visible aux figures 24 et 26. Dans cette configuration les points de fixation par clinchage 72 et 73 sont obtenus par emboutissage du fond plan 23 du corps de prise 2 dans support 71 de la languette négative 7. Le socle 203 comporte la partie identique 31, mais il est adapté à la languette négative 7 et à la languette positive qui lui est propre et à son support 241, visibles à la figure 24. Notamment, les ouvertures rectangulaires 234 et 235 sont perpendiculaires comme celles de la première prise, mais elles sont plus longues, comme cela est illustré à la figure 25, tandis qu'il y a un orifice central rond 236 contrairement au support de la deuxième prise.

Le corps de prise 2 est donc agencé pour recevoir les trois types d'éléments à languette négative, mais uniquement un à la fois.

Enfin, les figures 28 et 29 présentent deux types de capot d'ouverture possibles pour les différentes prises de courant. Le capot 351 de la figure 28 est classique tandis que le capot 352 de la figure 29 est chromé et présente des inscriptions (par exemple « 12V »).

Ces prises peuvent donc être fabriquées à partir d'un ensemble comprenant :
- des corps de prises 2 identiques entre eux, et
- des premiers éléments de connexion électrique négatifs 5 appartenant à en l'espèce trois types d'éléments. Les éléments de chaque type sont identiques entre eux et différent de ceux des autres types. Ils correspondent aux prises précitées.

L'ensemble comprend aussi des socles 3 aptes à être fixés aux corps 2. Les socles sont ici de trois types également qui différents les uns des autres mais présentent une partie identique 31.

L'ensemble comprend encore trois types de deuxièmes éléments de connexion électrique positifs 4 différents les uns des autres.

Il comprend enfin par exemple deux types de capots de fermeture d'un logement de la prise différents l'un de l'autre.

Pour la fabrication d'une prise de courant, on dispose d'un tel ensemble et on fixe un des éléments négatifs 5, 6 ou 7 au corps 2. On ajoute aussi un des éléments positifs, un socle et un capot.

Cet ensemble permet donc de fabriquer trois types de prises différents et permet donc d'obtenir un ensemble comprenant ici trois types de prises de courant différentes. Chaque prise comprend ici cinq pièces au total.

Bien entendu, on pourra apporter à l'invention de nombreuses modifications sans sortir du cadre de celle-ci.

On pourra modifier dans l'ensemble le nombre d'éléments de connexion positif ou négatif différents, le nombre de socles et le nombre de capots.

## Revendications

1. Prise de courant (10, 110, 210) pour un habitacle de véhicule, comprenant :
- un corps de prise (2) ; et
- au moins un élément de connexion électrique (5, 6, 7) fixé au corps de prise (2) par clinchage.

2. Prise de courant (10, 110, 210) selon la revendication précédente, dans laquelle le corps de prise (2) comprend une ouverture (27) débouchant sur un réceptacle destiné à recevoir un connecteur pour l'alimentation électrique d'un appareil électrique.

3. Prise de courant (10, 110, 210) selon la revendication précédente, dans laquelle le corps de prise (2) comprend au moins un fond plan (23) opposé à l'ouverture du réceptacle (27).

4. Prise de courant (10, 110, 210) selon la revendication précédente, dans laquelle le fond plan (23) du corps de prise (2) comprend au moins un orifice débouchant principal (24).

5. Prise de courant (10, 110, 210) selon l'une quelconque des revendications précédentes, dans laquelle le ou chaque élément de connexion électrique (5, 6, 7) comprend un support plan (51, 61, 71), et une languette (54, 64, 74) en saillie du support (51, 61, 71).

6. Prise de courant (10, 110, 210) selon la revendication précédente, dans laquelle le support plan (51, 61, 71) est fixé au fond plan (23) du corps de prise (2) par clinchage.

7. Prise de courant selon l'une quelconque des revendications précédentes, comprenant un socle (3, 103, 203) fixé dans une position prédéterminée au corps (2).

8. Prise de courant selon la revendication précédente, dans laquelle le socle (3, 103, 203) présente un relief (32) s'étendant en saillie d'un fond du socle (3, 103, 203) pour former une butée dans la prise (10, 110, 210) lors de la réception d'un connecteur.

9. Prise de courant selon l'une quelconque des revendications précédentes, dans laquelle l'élément de connexion électrique (5, 6, 7) étant un premier élément de connexion électrique, la prise de courant (10, 110, 210) comprend en outre au moins un deuxième élément de connexion électrique (4, 104, 204).

10. Prise de courant selon l'une quelconque des revendications précédentes, dans lequel le premier élément (5, 6, 7) est fixé au corps (2) par clinchage au niveau d'au moins un point de fixation (28, 52, 53, 62, 63, 72, 73).

11. Prise de courant selon la revendication précédente, dans laquelle chaque point de fixation est un point de fixation double (28).

12. Procédé de fabrication d'une prise de courant pour habitacle de véhicule (10, 110, 210), comprenant un corps de prise (2) ; et un élément de connexion électrique (5, 6, 7), l'élément de connexion électrique étant fixé au corps de prise (2) selon les étapes suivantes :
- mettre en contact l'élément de connexion électrique (5, 6, 7) et le corps de prise (2)
- fixer l'élément de connexion électrique (5, 6, 7) au corps de prise par clinchage.

13. Procédé de fabrication selon la revendication 12, dans lequel l'élément de connexion électrique (5, 6, 7) est embouti dans le corps de prise (2).

14. Procédé de fabrication selon l'une quelconque des revendications 12 à 13, dans lequel le corps de prise (2) est embouti dans l'élément de connexion électrique (5, 6 ,7).

15. Procédé de fabrication selon l'une quelconque des revendications 12 à 14, comprenant une étape d'insertion du corps de prise (2) dans un socle (3).
